(19) Europäisches Patentamt

European Patent Office

Office européen des brevets

(11) **EP 1 565 351 B1**

(12) **EUROPEAN PATENT SPECIFICATION**

(45) Date of publication and mention
of the grant of the patent:
**18.10.2006 Bulletin 2006/42**

(51) Int Cl.:
***B60R 19/03*** (2006.01)      ***B60R 19/18*** (2006.01)
***D07B 1/06*** (2006.01)

(21) Application number: **03796012.7**

(22) Date of filing: **12.11.2003**

(86) International application number:
**PCT/EP2003/050820**

(87) International publication number:
**WO 2004/048157 (10.06.2004 Gazette 2004/24)**

(54) **IMPACT BEAM COMPRISING ELONGATED METAL ELEMENTS**

STOSSFÄNGER MIT LÄNGLICHEN METALLELEMENTEN

POUTRELLE D'IMPACT COMPOSEE D'ELEMENTS METALLIQUES ALLONGES

(84) Designated Contracting States:
**AT BE BG CH CY CZ DE DK EE ES FI FR GB GR
HU IE IT LI LU MC NL PT RO SE SI SK TR**

(30) Priority: **28.11.2002 EP 02102661**

(43) Date of publication of application:
**24.08.2005 Bulletin 2005/34**

(73) Proprietor: **N.V. BEKAERT S.A.
8550 Zwevegem (BE)**

(72) Inventors:
• **JOOSTEN, Danny
B-9000 GENT (BE)**

• **LOKERE, Erwin
B-8830 HOOGLEDE (BE)**

(56) References cited:
**EP-A- 0 790 349**          **EP-A- 1 342 623**
**WO-A-01/44548**          **US-A- 4 278 726**
**US-A- 5 290 079**          **US-A- 5 672 405**

• **PATENT ABSTRACTS OF JAPAN vol. 016, no. 549
(M-1338), 18 November 1992 (1992-11-18) -& JP
04 208417 A (NIPPON STEEL CORP;OTHERS: 01),
30 July 1992 (1992-07-30)**

## Description

### Field of the invention.

The present invention relates to impact beams comprising a polymer matrix and a metal reinforcing structure.

### Background of the invention.

Presently known impact beams comprise a polymer matrix, reinforced with glass fibers or other polymer fibers.
An impact beam may also comprise metal parts, usually on the places where the impact beam receives compression load during impact. US-A-5 290 079 gives an example of such impact beam. In US-A-5 290 079 the impact beam also comprises a woven wire mesh, which is to improve the ductility and flexibility of the impact beam. US4278726 discloses a shock absorber according to the preamble of claim 1, which may be profiled. The shock absorber comprises brass coated steel strands embedded in a rubber strip.

Presently known impact beam in general have the disadvantage that they tend to break into parts at the location of impact, or scatter into several small particles which are projected towards objects which are in the periphery of the impact beam. This may cause further damage to underlying objects.

Further, there is a tendency into higher impact energy to be absorbed per volume of the impact beam, or towards a reduction of volume and possible price of an impact beam, being able to absorb the same amount of impact energy.

### Summary of the invention.

It is an object of the present invention to provide an impact beam, having a reduced possibility on disintegration or scattering during impact, meanwhile being able to absorb an increased amount of impact energy.

It was found that such impact beam is obtained when an impact beam is provided, comprising a polymer matrix and a metal reinforcing structure, which on its turn comprises at least one elongated metal element. This elongated metal element, e.g. a metal wire, a metal strand, a metal cord, a metal rope, a bundle of metal wires or a profiled metal wire, a metal strip or metal plate, possibly a perforated metal plate or strip. According to the invention, this elongated metal element has a plastic elongation at rupture of more than 3%, more preferred more than 5% or even more than 10%.

Preferably, the elongated metal element has an elastic and plastic elongation at rupture of more than 10% or even more than 15% or more than 20%. Such high elastic and plastic elongation is preferably obtained by using ductile metal alloys, such as preferably low-carbon steel alloys. Low carbon steel alloys are to be understood as alloys comprising a Fe-balance and less than 0.7% C, most preferably less than 0.5 %C.

The elongated metal element have a tensile strength of less than 2000Mpa, or even less than 1500Mpa or less than 1000MPa.

Each elongated metal element has preferably a cross section having a cross-section area of more than $7.9*10^{-3}$ mm$^2$, more preferred more than $10^{-2}$ mm$^2$ or even more than $2*10^{-2}$ mm$^2$.

The sum of "elastic" and "plastic" elongation used herein is to be understood as the total elongation of the elongated metal element, measured in its load-elongation diagram, minus possible "structural" elongation.

As generally known in the art, the load-elongation curve of a metal element is characterized by an elastic elongation zone preceding a plastic elongation zone.

The elastic elongation zone is limited at its lower end by the origin of the curve (elongation being 0%), and at its upper side by the elongation at the yield point of the curve. This yield point, also known as $R_{p0.2}$, is defined as the tensile strength of the intersection of the load-elongation curve with a line having slope equal to metal's modulus of elasticity E and an intersection with the abscissa at 0.2% elongation.

The plastic elongation zone is limited at its lower side by the upper limit of the elongating zone, and at its upper side by the elongation at rupture of the metal element.

Possibly, the metal element may have a third elongation zone, being a "structural elongation zone" which occurs at the lowest load and elongation, before the elastic elongation zone. In such case, the structural elongation zone is limited at its lower end by the origin of the curve (elongation being 0%) and at its upper end by the elongation at the intersection of the abscissa with the line according to Young's law. In this situation, the elastic elongation zone is limited at its lower end by the by the elongation at the intersection of the abscissa with the line according to Young's law, and at its upper side by the elongation at the yield point of the curve. This yield point, also known as $R_{p0.2}$, is defined as the tensile strength of the intersection of the load-elongation curve with a line having slope equal to the metal's modulus of elasticity E and an intersection with the abscissa at 0.2% elongation added to the elongation at the intersection of the abscissa with the line according to Young's law.

The line according to Young's law is defined as

$$(\sigma = E * \varepsilon)$$

E being the E-modulus of the elastic elongation zone of the load-elongation diagram, as generally known in the art. The line is drawn in such a way that the aberration of the line with the straight part of the elastic elongation zone is minimum. In case no structural elongation is present, this line crosses the abscissa at the origin of the curve.

The structural elongation, if any, is a result of e.g.

- the strand, cord or rope construction, in case the elongated metal element is a strand, cord or rope, in case this construction allows the filaments of the strand cord or rope to move relative toward each other during tensile load;
- possible preforming, e.g. corrugation given to the elongated metal element itself;
- possible preforming given to the metal filaments comprised in the elongated metal element, in case the elongated metal element is a strand, cord or rope construction;

The occurrence of such means to obtain structural deformation and structural elongation, may assist to improve the deformation of the metal reinforcing structure during impact beam production. Further, preforming may improve the mechanical anchoring of the polymer matrix and the metal reinforcing structure.

It is preferred that the yield point $R_{p0.2}$ is larger than 0.85 times $R_M$, $R_M$ being the tensile strength at fracture of the elongated metal element Most preferred, $R_{p0.2}$ is in the range of $0.85*R_M$ to $R_M$.
Preferably, the modulus of elasticity of the elongated metal elements is larger than the modulus of elasticity of the polymer matrix, most preferably the modulus of elasticity of the elongated metal element is larger than 60Gpa or even more than 200Gpa.

The metal reinforcing structure comprises at least one, but preferably more than one elongated metal element. These elongated metal elements may be essentially parallel to each other. In case the elongated metal element are metal wires, metal strands, metal cords, metal ropes, bundles of metal wires, profiled metal wires or metal strips, the elongated metal elements may be incorporated into a metal reinforcing structure being a woven, braided or knitted structure, which may comprise other elements such as glass or polymer yarns, next to the elongated metal elements.
In case the elongated metal elements are metal plates, the metal plates are preferably perforated or made out of so-called stretch metal, in order to ensure a good anchoring between polymer matrix and the metal reinforcing structure.
Possibly a welded mesh is provided using elongated metal element. Alternatively, one or several elongated metal elements may first be coated with a polymer layer, and laminated one to another providing a mesh-like structure having elongated metal elements in two different directions, crossing each other always at the same side of the laminate, or alternating at both sides of the laminate.

Preferably, this metal reinforcing structure is present at the locations in the impact beam, which are subjected to tensile loads during impact, being the opposite side of the surface of the impact beam, being subjected to the impact force.

It was found that when elongated metal element are used to provide an impact beam as subject of the invention, the amount of impact energy that may be absorbed by the impact beam as a hole, and the metal reinforcing structure in particular, is sufficient to protect the underlying structure. The large plastic elongation of the elongated metal elements however, allows the impact beam to bend to a larger extent. This larger extension causes a less high compression force on the polymer material near the point of impact. Since these compression forces at the impact point provoke polymer rupture and scattering of the polymer material, the integrity of the impact beam as subject of the invention during impact is significantly improved, since the compression forces are reduced due to the larger elongation of the elongated metal element.

Further, because of this larger extension of the metal reinforcing structure and elongated metal elements, the elongated metal element are directed into a larger extent in the direction of impact. This results in a more important loading of the elongated metal elements in axial direction as compared to impact beams comprising elongated metal element having a low elongation at rupture but a higher tensile strength.

Finally, the tensile strength of the elongated metal element is limited to less than 2000 Mpa. In such a way, the deceleration level of the object on which the impact beam is mounted, during impact at the impact beam, is limited to acceptable levels, meanwhile still providing sufficient stiffness to the impact beam and providing sufficient impact absorption capacity to the impact beam. Combined with a significantly high modulus of elasticity of the elongated metal element, e.g. larger than 200Gpa, the energy absorbed can be maximized.

An impact beam as subject of the invention further comprises a polymer matrix, preferably chosen out of the group of thermoplastic semi-crystalline polymers such as polypropylene, polyamide, polyester, polyethyleneterephtalate, polybuteneterephtalate as well as blends of these materials, or thermoplastic elastomers , e.g. polyamide- or polyolefin-based thermoplastic elastomers such as polyesteramides, polyetheresteramides, polycarbonate-esteramides or polyether-block-amides or thermoset polymers, e.g. polyester, epoxy, vinylester, phenol, melamine based thermoset polymers

The polymer matrix may further comprise glass or C-fibers and/or mineral fillers to reinforce the volume layer. Fibers can either be random, uni-, bi- or multidirectional, chopped, or a combination of those. The plastic elongation of the polymer matrix may be limited to only 4% by adding such fibers or fillers.

Possibly, the elongated metal elements are first laminated or extruded with a polymer layer, hereafter referred to as "embedding layer". The polymer material of the embedding layer is preferably chosen out of the group of thermoplastic semi-crystalline polymers such as polypropylene, polyamide, polyester, polyethyleneterephtalate, polybuteneterephtalate as well as blends of these materials, or thermoplastic elastomers , e.g. polyamide- or polyolefin-based thermoplastic elastomers such as polyesteramides, polyetheresteramides, polycarbonate-esteramides or polyether-block-amides.

Preferably, the shape of the impact beam, the properties of the polymer matrix and of the elongated metal elements are tuned in order to maximize the absorbed impact energy.

An impact beam as subject of the invention may be used e.g. as a part of a vehicles bodywork, e.g. to support soft bumpers of vehicles such as cars, busses or trucks. It may also be used to improve the impact resistance other elements of the vehicle's coachwork to impact forces. Impact beam as subject of the invention may be used to make e.g. doors, frame, bonnet or hood and or cross beams more impact resistant A person skilled in the art understands that the shape of cross sections of an impact beam as subject of the invention, as well as the outer shape of the impact beam, may be adjusted to the use of the impact beam.

The impact beam as subject of the invention absorbs the impact energy and protects the other elements of the vehicle for damaging. The impact beam as subject of the invention also prevents the particles of the polymer matrix to damage peripheral elements of the vehicle, since the integrity of the impact beam after impact can be secured.

The impact beams as subject of the invention may also be used for crash barriers or other impact absorbing applications.

**Brief description of the drawings.**

The invention will now be described into more detail with reference to the accompanying drawings wherein

- FIGURE 1a and FIGURE 1b show schematically an impact beam as subject of the invention.
- FIGURE 2a and FIGURE 2b show a test setup for measuring the absorbed energy under impact load.
- FIGURE 3 shows a load-displacement curve obtained using the test setup of FIGURE 2 on an impact beam as subject of the invention and an impact beam without elongated metal elements.

**Description of the preferred embodiments of the invention.**

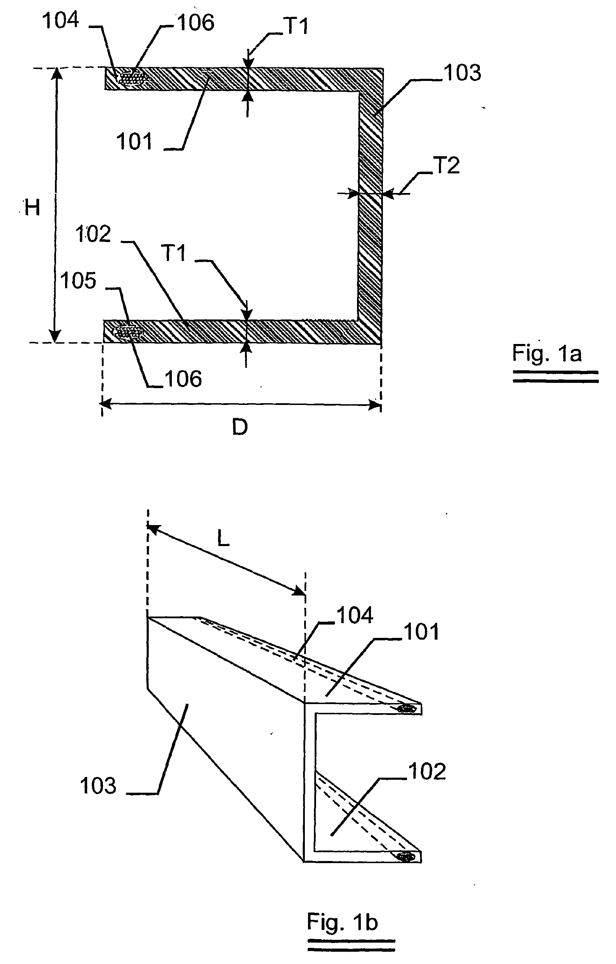

A cross section of an impact beam as subject of the invention is schematicallu shown in FIGURE 1a and FIGURE 1b. The cross section is essentially a U-shaped profile having an two parallel legs 101 and 102 and a side 103 perpendicular to those two legs. The impact beam is to be subjected to impact forces at the side 103. At the outer section of the legs remoted from the side 103, each of the legs has a reinforced region 104 and 105, in which elongated metal elements 106 are provided. as shown in FIGURE 1b, the reinforced regions extend over the whole length L of the impact beam.

The dimensions of the embodiment were chosen in such a way that the accumulated volume of the elongated metal elements is 5.42 % of the total volume of the impact beam. As an example

H=100mm
D = 100mm
T1 = T2 = 10 mm

The elongated metal elements used are chosen from so-called Low Carbon steel having E modulus of 210Gpa, an elastic elongation of 0.26% and plastic elongation of at least 5% e.g. 8% and a tensile strength $R_M$ of 600Mpa. They are provided as individual wires, e.g. 21 wires from 2.1mm diameter, or they may be provided as one or more cords, consisting of a number of wires. In case of individual wires, not comprising an undulation, no structural elongation is obtained. In case a cord of wires is used, an open cord construction may be preferred in order to improve the mechanical anchoring of the elongated metal element and the polymer material. A structural elongation of the cord can be obtained.

As polymer matrix, preferably a GMT, comprising a thermoplastic glass fiber reinforced polymer is used. Most preferred, polymer material is polypropylene. The GMT comprisis e.g. approximately 30% glass fibers and has an E-modulus of 2.5Gpa.

The length of the U-profile was chosen to be 1400mm.

In order to compare the impact beam as subject of the invention, the impact beam as shown in FIGURE 1a and FIGURE 1b is compared with an impact beam having the same dimensions, but only differing in the fact that no elongated metal elements are used to reinforce. The latter is hereafter referred to as "non-reinforced impact beam".

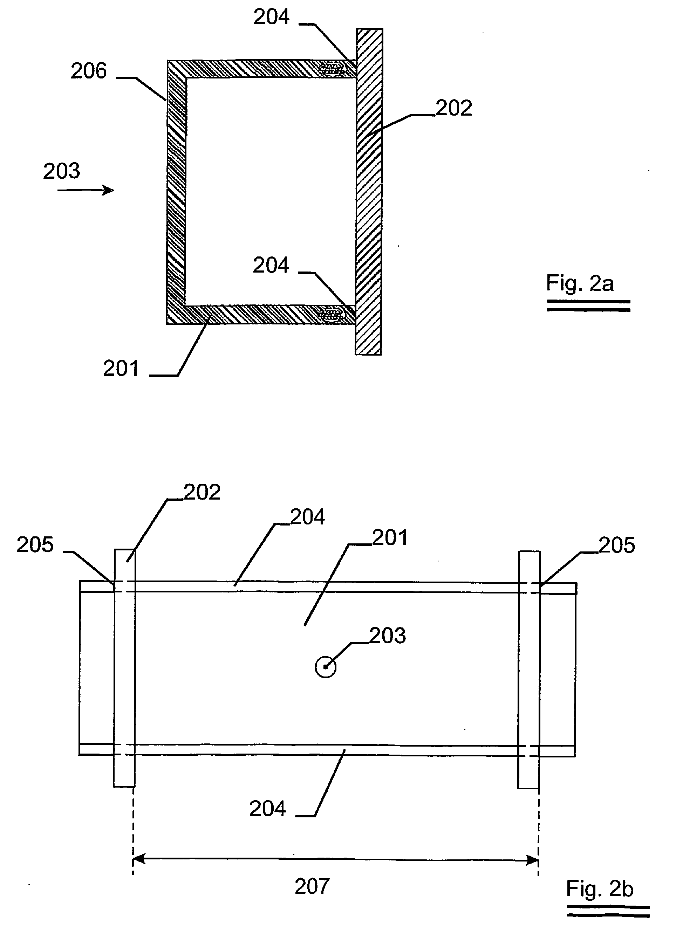

The impact beam is supported as shown in FIGURE 2a and FIGURE 2b. The impact beam 201 is supported at two points 205 by two supports 202, being on a distance 207 of 1000mm from each other. The impact beam makes contact with the supports 202 at the outer ends 204 of the legs, being maximally remote from the front side 206. An impact force, indicated with arrow 203 is applied in the center of the front side 206.

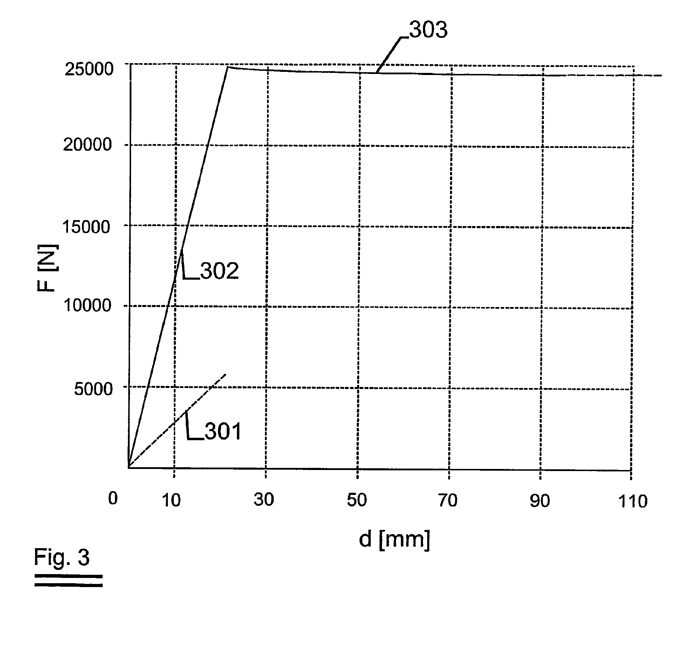

Both impact beams are subjected to an impact using a mass of 1500kg. It was observed that the non-reinforced impact beam failed using an impact speed of 1.44 km/h. The polymer material failed at the outer ends 204 of the legs of the impact beam, due to a tensile stress which exceeds the maximum allowable tensile stress. The outer ends 204 of the legs were elongated more than 2%, which is the limit of the GMT. The load-displacement curve is shown in FIGURE 3.

The curve shows the relation between applied force F expressed in Newton (in ordinate) and the displacement d of the front side 206 expressed in mm. Curve 301 shows the relation of a non reinforced impact beam. The impact beam absorbs 120 Joule (being the surface beyond the curve 301). At a displacement of 26.5mm and at a force of approximately 6000 N, the impact beam fails since the GMT breaks at the outer side of the legs, which are subjected to the maximum tensile load.

An impact beam as subject of the invention and having the properties as of FIGURE 1, is subjected to the same test Using an impact speed of 2.13 km/h, and an impact mass of 1500 kg, the GMT fails when the displacement is 20.9 mm at a force of 20000N. However, as shown in FIGURE 3, the surface under the curve 302 from the impact beam as subject of the invention, already reaches an absorbed energy of 262 Joule. By adjusting the tensile strength of the elongated metal elements being used, excessive failure of the GMT is prevented. At this point, the elongated metal elements preferably has reached their $R_{p0.2}$ in order to start flowing plastically. For the example given, an $R_{p0.2}$ of 500Mpa may be chosen. As the $R_{p0.2}/R_M$ is 83.3%, the impact force is limited in order to obtain an acceptable deceleration. This in combination with the long plastic elongation as subject of the invention of the elongated metal elements, in this embodiment being more than 3%, the extra-absorbed energy can be increased significantly. In total, more than 5250 Joule can be absorbed at a plastic elongation of 5%. The displacement in such case is at least 240mm. This is shown in the second part of 303 of the curve 302.

It is clear that, when this impact beam is used as e.g. bumper beam, the energy, which can be absorbed before the GMT of the bumper beam, fails, is improved. And even more, after polymer failure, the impact beam still continues to absorb energy, so further protecting the rest of the construction behind.

## Claims

1. An impact beam comprising a polymer matrix and a metal reinforcing structure, said metal reinforcing structure comprising at least one elongated metal element (106), **characterized in that** said elongated metal element has a plastic elongation at rupture of more than 3%, said elongated metal element having a tensile strength $R_M$ of less than 2000Mpa.

2. An impact beam according to any of claim 1, said elongated metal element (106) has a tensile strength $R_M$ of less than 1500Mpa.

3. An impact beam as in any of claims 1 to 2, said elongated metal element (106) has a modulus of elasticity of more than the modulus of elasticity of said polymer matrix.

4. An impact beam as in claim 3, said elongated metal element (106) has an modulus of elasticity of more than 60Gpa.

5. An impact beam as in any of claims 1 to 4, said elongated metal element has a yield strength $R_{p0.2}$ being larger than $0.85*R_M$.

6. An impact beam according to any of claim 1 to 5, said elongated metal element has an elastic and plastic elongation at rupture of more than 10%.

7. An impact beam according to any of claim 1 to 6, said elongated metal element (106) being chosen out of the group consisting of a metal wire, a metal strand, a metal cord, a metal rope, a bundle of metal wires, a profiled metal wire, metal strip or metal plate.

8. An impact beam according to any of claim 1 to 7, said elongated metal element (106) has a cross-section area of more than $7.9*10^{-3}$ mm$^2$.

9. An impact beam according to any of claim 1 to 8, said elongated metal element (106) is provided out of steel alloy.

10. An impact beam according to claim 9, said steel alloy comprises balance Fe and less than 0.7% C.

11. An impact beam according to any of claim 1 to 10, said metal reinforcing structure is a woven, braided knitted, welded or laminated structure, comprising said elongated metal element.

12. An impact beam according to any of claim 1 to 11, said polymer matrix is a thermoplastic semi-crystalline polymer.

13. An impact beam according to any of claim 1 to 11, said polymer matrix is a thermo-set polymer.

14. Use of an impact beam as in one of the proceeding claims, as a part of the bodywork of a vehicle.

## Patentansprüche

1. Aufprallträger, der eine Polymermatrix und eine metallische Verstärkungsstruktur umfaßt, wobei die metallische Verstärkungsstruktur mindestens ein längliches Metallelement (106) umfaßt, **dadurch gekennzeichnet, daß** das längliche Metallelement eine plastische Bruchdehnung von mehr als 3% aufweist, wobei das längliche Metallelement eine Zugfestigkeit $R_M$ von unter 2000 MPa aufweist.

2. Aufprallträger nach Anspruch 1, wobei das längliche Metallelement (106) eine Zugfestigkeit $R_M$ von unter 1500 MPa aufweist.

**3.** Aufprallträger nach einem der Ansprüche 1 und 2, wobei das längliche Metallelement (106) einen Elastizitätsmodul aufweist, der größer ist als der Elastizitätsmodul der Polymermatrix.

**4.** Aufprallträger nach Anspruch 3, wobei das längliche Metallelement (106) einen Elastizitätsmodul von über 60 GPa aufweist.

**5.** Aufprallträger nach einem der Ansprüche 1 bis 4, wobei das längliche Metallelement eine Streckgrenze $R_{P0,2}$ von über $0,85*R_M$ aufweist.

**6.** Aufprallträger nach einem der Ansprüche 1 bis 5, wobei das längliche Metallelement eine elastische und plastische Bruchdehnung von über 10% aufweist.

**7.** Aufprallträger nach einem der Ansprüche 1 bis 6, wobei das längliche Metallelement (106) aus der Gruppe ausgewählt ist bestehend aus einem Metalldraht, einer Metallitze, einem Metallkabel, einem Metallseil, einem Bündel von Metalldrähten, einem profilierten Metalldraht, Metallstreifen oder Metallplatte.

**8.** Aufprallträger nach einem der Ansprüche 1 bis 7, wobei das längliche Metallelement (106) eine Querschnittsfläche von über $7,9*10^{-3}$ mm$^2$ aufweist.

**9.** Aufprallträger nach einem der Ansprüche 1 bis 8, wobei das längliche Metallelement (106) aus einer Stahllegierung vorgesehen ist.

**10.** Aufprallträger nach Anspruch 9, wobei die Stahllegierung Rest Fe und weniger als 0,7% C umfaßt.

**11.** Aufprallträger nach einem der Ansprüche 1 bis 10 wobei die metallische Verstärkungsstruktur eine gewebte, geflochten-gestrickte, geschweißte oder laminierte Struktur ist, umfassend das längliche Metallelement.

**12.** Aufprallträger nach einem der Ansprüche 1 bis 11, wobei die Polymermatrix ein thermoplastisches halbkristallines Polymer ist.

**13.** Aufprallträger nach einem der Ansprüche 1 bis 11, wobei die Polymermatrix ein duroplastisches Polymer ist.

**14.** Verwendung eines Aufprallträgers in einem der vorausgegangenen Ansprüche als Teil der Karosserie eines Fahrzeugs.

**Revendications**

**1.** Poutrelle d'impact comprenant une matrice polymère et une structure de renforcement métallique, ladite structure de renforcement métallique comprenant au moins un élément métallique allongé (106), **caractérisée en ce que** ledit élément métallique allongé présente un allongement plastique à la rupture supérieur à 3%, ledit élément métallique allongé présentant une résistance à la traction $R_M$ inférieure à 2000 MPa.

**2.** Poutrelle d'impact selon la revendication 1, dans laquelle ledit élément métallique allongé (106) présente une résistance à la traction $R_M$ inférieure à 1500 MPa.

**3.** Poutrelle d'impact selon l'une quelconque des revendications 1 à 2, dans laquelle ledit élément métallique allongé (106) présente un module d'élasticité supérieur au module d'élasticité de ladite matrice polymère.

**4.** Poutrelle d'impact selon la revendication 3, dans laquelle ledit élément métallique allongé (106) présente un module d'élasticité supérieur à 60 GPa.

**5.** Poutrelle d'impact selon l'une quelconque des revendications 1 à 4, dans laquelle ledit élément métallique allongé présente une limite d'élasticité $R_{p0,2}$ supérieure à $0,85*R_M$.

**6.** Poutrelle d'impact selon l'une quelconque des revendications 1 à 5, dans laquelle ledit élément métallique allongé présente un allongement élastique et plastique à la rupture supérieur à 10%.

**7.** Poutrelle d'impact selon l'une quelconque des revendications 1 à 6, dans laquelle ledit élément métallique allongé (106) est choisi dans le groupe comprenant un fil métallique, un toron métallique, un câble métallique, une corde métallique, un faisceau de fils métalliques, un fil métallique profilé, une bande de métal ou une plaque de métal.

**8.** Poutrelle d'impact selon l'une quelconque des revendications 1 à 7, dans laquelle ledit élément métallique allongé (106) présente une aire de section transversale supérieure à $7,9*10^{-3}$ mm$^2$.

**9.** Poutrelle d'impact selon l'une quelconque des revendications 1 à 8, dans laquelle ledit élément métallique allongé (106) est constitué d'un alliage d'acier.

**10.** Poutrelle d'impact selon la revendication 9, dans laquelle ledit alliage d'acier comprend un solde de Fe et moins de 0,7% de C.

**11.** Poutrelle d'impact selon l'une quelconque des revendications 1 à 10, dans laquelle ladite structure de renforcement métallique est une structure tissée, tressée tricotée, soudée ou stratifiée, comprenant ledit élément métallique allongé.

**12.** Poutrelle d'impact selon l'une quelconque des revendications 1 à 11, dans laquelle ladite matrice polymère est un polymère semi-cristallin thermoplastique.

**13.** Poutrelle d'impact selon l'une quelconque des revendications 1 à 11, dans laquelle ladite matrice polymère est un polymère thermodurci.

**14.** Utilisation d'une poutrelle d'impact selon l'une quelconque des revendications précédentes comme partie de la carrosserie d'un véhicule.

104　106　T1

103

T2

H

101

102　T1

105

106

D

Fig. 1a

L

104　101

103

102

Fig. 1b

Fig. 2a

Fig. 2b

Fig. 3